# EUROPEAN PATENT SPECIFICATION

(11) **EP 1 564 239 B1**
(45) Date of publication and mention of the grant of the patent: **08.12.2010**
(21) Application number: 03751377.7
(22) Date of filing: 08.10.2003
(51) Int. Cl.: C08J 5/18, G02B 5/00, G02B 1/10, G09F 9/00, B32B 5/14, B32B 7/02, C09J 133/06, C08L 101/00

(54) **PROCESS FOR PREPARING A FILM WITH PRESSURE-SENSITIVE ADHESIVE**
VERFAHREN ZUR HERSTELLUNG EINER FOLIE MIT HAFTKLEBSTOFF
PROCEDE POUR PREPARER UN FILM AVEC ADHESIF AUTOCOLLANT

(30) Priority: 17.10.2002 JP 2002303350; 17.10.2002 JP 2002303351; 10.01.2003 JP 2003004721; 03.09.2003 JP 2003311574
(43) Date of publication of application: 17.08.2005
(73) Proprietor: Bridgestone Corporation, Tokyo 104-8340 (JP)
(72) Inventor: KITANO, Hideki, Kodaira-shi, Tokyo 187-0031 (JP); SASAKI, Kiyomi, Kodaira-shi, Tokyo 187-0031 (JP); MURAYAMA, Kenji, Kodaira-shi, Tokyo 187-0031 (JP); KOTSUBO, Hidefumi, Kodaira-shi, Tokyo 187-0031 (JP)
(74) Representative: Whalley, Kevin
(86) International application number: PCT/JP2003/012876
(87) International publication number: WO 2004/035665

(56) References cited:
- WO-A1-01/70493
- JP-A- 11 283 531
- JP-A- 11 307 017
- JP-A- 2002 107 507
- JP-A- 2002 241 708
- US-A- 3 914 016
- US-B1- 6 313 890

## Description

The present invention relates to a method for manufacturing an adhesive-including film. In particular, it relates to a method for manufacturing a film suitable for electronic displays, e.g. liquid crystal displays.

Light sources are required to display letters and images on liquid crystal displays. In recent years, thicknesses of displays have been reduced. Consequently, the light from the light source is incident from one side surface or two side surfaces. Now, the light is scattered by using a light guide plate, a diffusion film, and the like so that the light reaches the front of the display panel.

In order to prevent damage to the display panel and improve viewability, a functional light transmission film is stuck on a front panel. An adhesive is adhered to this film, and the film is stuck by this adhesive layer (for example, Japanese Unexamined Patent Application Publication No. 2002-107507).

The uniformity of the luminance of the display panel is not perfect, and variations in luminance may occur. In particular, as the display is upsized, variations in luminance tend to become conspicuous. As for the above-described variations in luminance, in general the luminance is decreased with distance from the light source. However, sometimes the luminance is decreased as the light source approaches, or is varied, such as dark-bright-dark, depending on the configuration of the light guide plate. In many cases, variations in luminance are generally in such a manner that the luminance is varied in a direction of a straight line. In some type of displays, a phenomenon occurs in which the luminance of the central portion of a screen is high, but the luminance of the perimeter is low.

It is an object of the present invention to provide a method for manufacturing a light transmission film capable of overcoming the above-described problems in the background art and eliminating or suppressing variations in luminance of a display panel.

A light transmission film is characterized in that the total light transmittance is varied in a transverse direction of the film.

This film can exhibit a distribution of light and dark which is the reverse of high and low of the luminance in accordance with variations in luminance of the display. This film is stuck to the display and, thereby, variations in luminance of the display can be eliminated or suppressed.

The total light transmittance of the film may be varied not only in the transverse direction, but also in the direction orthogonal to the transverse direction. That is, the total light transmittance may be varied not only in a one-dimensional direction, but also in a two-dimensional direction.

In order to vary the total light transmittance of the film in a one-dimensional direction or a two-dimensional direction, in the case where the film includes a base film and a colored adhesive layer, the total light transmittance of this adhesive layer may be varied in a one-dimensional direction or a two-dimensional direction. The total light transmittance of the adhesive layer can be varied in a one-dimensional direction or a two-dimensional direction by changes in the thickness or the color strength of the adhesive layer.

The total light transmittance of the film can also be varied in a one-dimensional direction or a two-dimensional direction by forming a colored layer other than the adhesive layer on the base film and changing the thickness or the color strength of this colored layer. This colored layer may be a functional layer, e.g. an antireflection layer, a hard coat layer, an antiglare layer, or an electrically conductive layer. The color may be either a chromatic color or an achromatic color.

In the case where the base film itself which constitutes the film is colored, the total light transmittance of the film may be varied in a one-dimensional direction or a two-dimensional direction by changing the thickness or the color strength of this base film.

This film can be used not only for liquid crystal displays of back light systems or front light systems but also for other displays, e.g. CRT, PDP, and FED. This film can also be used for display panels, e.g. electric bulletin boards, having light sources.

According to the present invention, a method for manufacturing an adhesive-including film includes the step of supplying an adhesive on a film surface to form an adhesive layer on the film surface while the film is continuously forwarded, and the method includes the step of forming the adhesive layer so that the thickness of the adhesive layer is varied in a film width direction orthogonal to the forwarding direction of the film.

A method in which all materials are homogeneously mixed, kneading is performed with an extruder, rolls, or the like and, thereafter, a film in a predetermined shape is formed by a film formation method, e.g., calender rolling, T die extrusion, or inflation, can be used as the method for forming (a film of) an adhesive layer on a film. For example, in the T die extrusion, the thickness of the formed film is varied in one direction (transverse direction) by changing the thickness of an extrusion hole. Consequently, the total light transmittance is varied. In addition, a film can also be formed by a method in which all constituents are homogeneously mixed and dissolved into a good solvent, the resulting solution is applied to a support, a separator made of a precise coating of silicone or fluororesin, by a flow coating method, a roll coating method, a gravure roll method, a meyer bar method, a lip die coating method, or a comma method, and the solvent is removed by drying. At that time, in order to change the thickness of the formed film in a direction perpendicular to the coating direction, for example, in the comma method, a gap between a roll and a knife is changed in the perpendicular direction by providing curving. Consequently, the thickness after drying is varied.

The invention will be further described with reference to the accompanying drawings, wherein
Fig. 1 is a sectional view of an adhesive-including film according to an embodiment.
Figs. 2A and 2B are sectional views showing a method for manufacturing an adhesive-including film according to an embodiment.
Fig. 3 is a sectional view showing a method for manufacturing an adhesive-including film according to an embodiment.
Fig. 4A is a sectional view showing a method for manufacturing an adhesive-including film according to an embodiment, and Fig. 4B is a diagram showing the shape of a blade.
Fig. 5 is a perspective view showing a method for manufacturing an adhesive-including film according to an embodiment.
Fig. 6 is a sectional view showing a method for manufacturing an adhesive-including film according to an embodiment.
Fig. 7 is a sectional view showing a method for manufacturing an adhesive-including film according to an embodiment.
Fig. 8A is a vertical sectional view showing a method for manufacturing an adhesive-including film according to another embodiment. Fig. 8B is a sectional view of the section indicated by a line VIIIb-VIIIb shown in Fig. 8A. Fig. 8C is a sectional view of the section indicated by a line VIIIc-VIIIc shown in Fig. 8B.

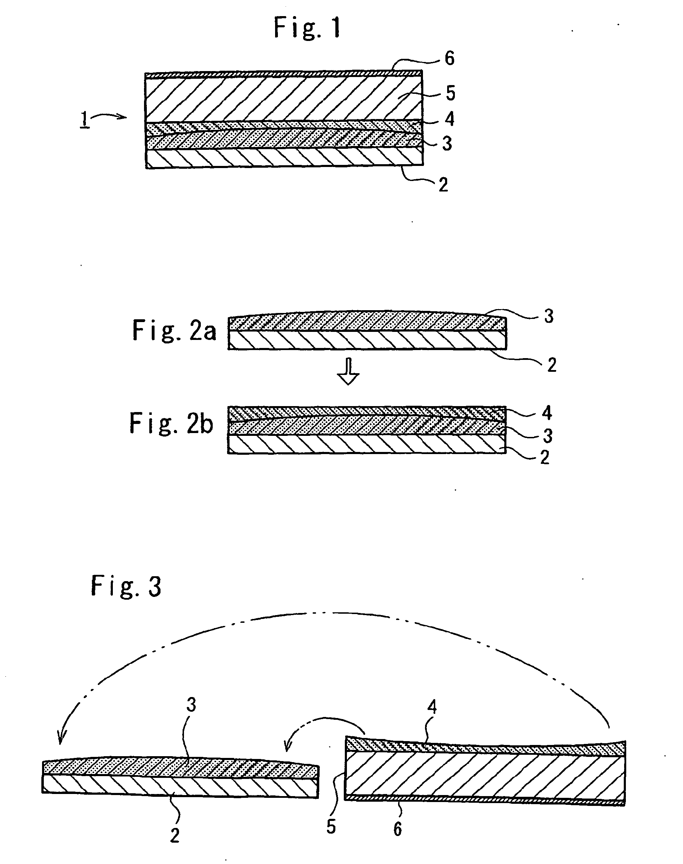

Embodiments of the invention will be described below with reference to the drawings. Fig. 1 is a sectional view in the film width direction of an adhesive-including film according to an embodiment. Fig. 2 to Fig. 8C are explanatory diagrams of manufacturing methods therefor.

This adhesive-including film 1 includes a mold release film 2, a first adhesive layer 3 disposed on the mold release film 2, a second adhesive layer 4 disposed on the first adhesive layer, a base film 5 on the second adhesive layer, and an antireflection film 6 disposed on the film surface opposite to the second adhesive layer 4 of the base film 5.

In the present embodiment, the first adhesive layer 3 is highly colored as compared with the second adhesive layer 4. The second adhesive layer 4 may be colorless. The thickness of the first adhesive layer 3 is varied in the width direction of the film 1. In the present embodiment, the thickness of the central portion of the first adhesive layer 3 in the width direction of the film is larger than the thicknesses of both end sides. The total thickness of the first adhesive layer 3 and the second adhesive layer 4 is uniform all over the film.

In the case where the uniformity of the thickness of the adhesive layer is unnecessary, the second adhesive layer may not be disposed.

The film 1 is long-extended in a direction orthogonal to the width direction (direction perpendicular to the drawing in Fig. 1). The thickness of the first adhesive layer 3 may be uniform or periodically changed in the longitudinal direction of the film.

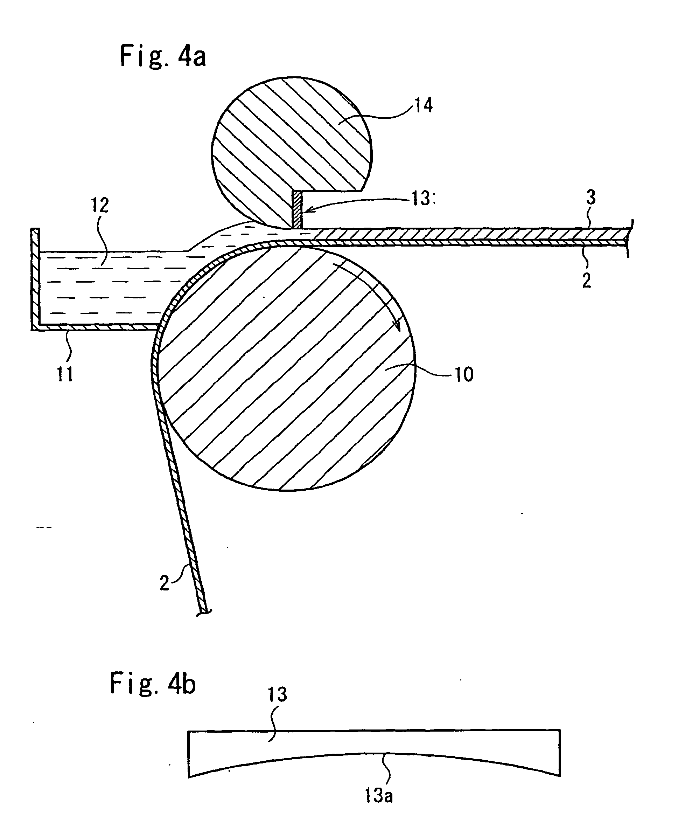

A method for manufacturing this first adhesive layer 3 on a mold release film will be described with reference to Fig. 4 to Fig. 7.

As shown in Fig. 4A, the mold release film 2 is looped over an application roll 10 and is forwarded continuously. The direction of the center of axis of this application roll 10 is set in the horizontal direction. A liquid dam 11 is disposed adjacent to this application roll 10, and a coating solution 12 held in the liquid dam 11 is in contact with the film surface of the mold release film 2.

As the film 2 is forwarded, the coating solution 12 is adhered to the film surface and is pulled up. The coating solution 12 pulled up while being adhered to this film 2 is scraped and leveled with a blade 13, so that the first adhesive layer 3 is formed.

This blade 13 is attached to a comma 14. In the present embodiment, as shown in Fig. 4B, the lower edge of the blade 13 has the form of an arch surface 13a curved to become convex upward in the width direction of the film 2. Consequently, the clearance between the blade 13 and the film 2 reaches a maximum value at the central portion of the width direction of the film 2 and decreases with increasing proximity to both end sides of the film 2. Since the coating solution 12 on the film 2 is leveled with this blade 13, the thickness of the adhesive layer 3 disposed on the film 2 reaches a maximum at the central portion in the width direction of the film 2 and decreases with increasing proximity to both end sides.

In order to complete the film 1, the second adhesive layer 4 may be formed on the first adhesive layer 3, as shown in Figs. 2A and 2B, and the base film 5 may be stacked thereon. Alternatively, the second adhesive layer 4 may be formed on the base film 5, and the mold release film 2 provided with the first adhesive layer 3 and the base film 5 provided with the second adhesive layer 4 may be stacked, as shown in Fig. 3. The thickness of the second adhesive layer 4 shown in Fig. 3 decreases with increasing proximity to the central portion in the width direction of the film 5. The above-described second adhesive layer 4 may be formed on the film 5 by using a blade curved to become convex downward, for example.

As described above, the first adhesive layer 3 of the film 1 is highly colored as compared with the second adhesive layer 4. Therefore, the film 1 is most highly colored (the total light transmittance is low) at the central portion in the width direction, and becomes lightly colored with increasing proximity to both end sides. That is, the total light transmittance of the film 1 is increased with increasing proximity to both end sides in the width direction.

Consequently, in the case where the mold release film 2 is peeled off and the film 1 is stuck to a display, when variations in luminance of the display are in a pattern reverse to the distribution of light and dark of the film 1, the variations in luminance can be eliminated or reduced.

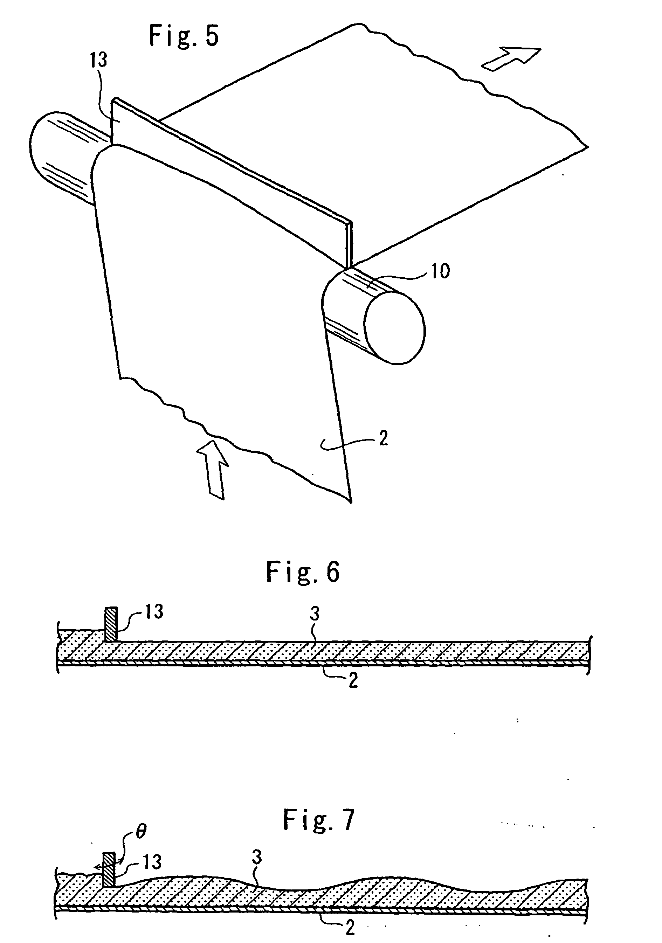

By making the blade 13 stand still as shown in Fig. 6, the thickness of the first adhesive layer 3 is made uniform in the longitudinal direction of the film 2. By shaking the blade 13 in the direction indicated by an arrow θ as shown in Fig. 7, the thickness of the first adhesive layer 3 is periodically varied in the longitudinal direction of the film 2. In the case where the configuration shown in Fig. 7 is adopted, an adhesive-including film, in which dark and light are periodically varied not only in the width direction of the film 1, but also in the direction orthogonal thereto, is produced.

In Fig. 7, the lower edge side of the blade 13 is shaken. However, the thickness of the first adhesive layer 3 can also be periodically varied in the longitudinal direction of the film 2 by shaking the upper edge side of the blade 13. The thickness of the first adhesive layer 3 can also be periodically varied in the longitudinal direction of the film 2 by periodically moving the blade 3 up or down.

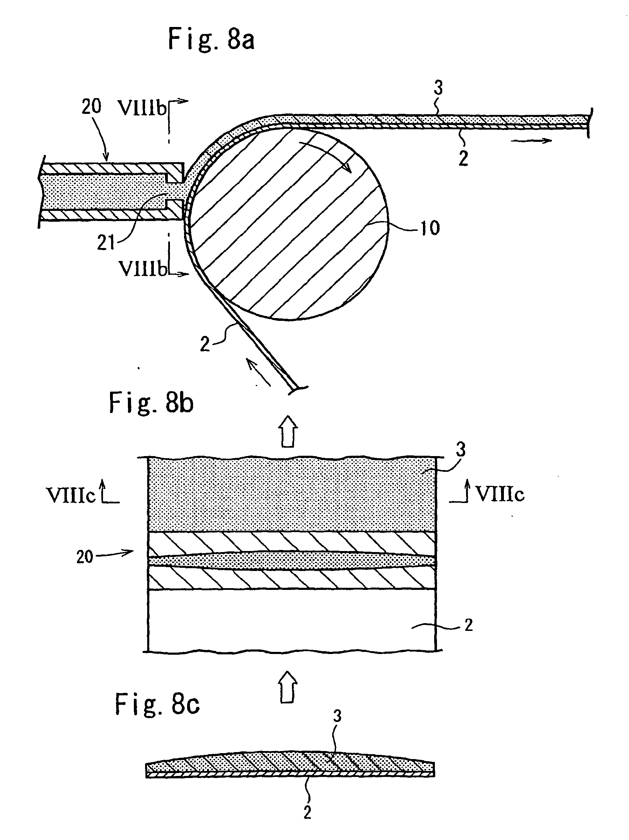

Although the blade is used in Fig. 7, the thickness of the first adhesive layer 3 may also be varied in the longitudinal direction of the film 2 by using a lip die 20 as shown in Fig. 8A. The lips 21 of this lip die 20 have a large width of the opening at the center in the width direction, and the width of the opening decreases with increasing proximity to both end sides in the width direction, as shown in Fig. 8B. In this manner, as shown in Fig. 8C, the thickness of the first adhesive layer 3 reaches a maximum at the center in the width direction, and the thickness decreases with increasing proximity to both end sides.

In the cases shown in Figs. 8A to 8C, when the quantity of discharge of the coating solution from the lip die 20 is made constant with time, the thickness of the adhesive layer 3 becomes uniform in the forwarding direction of the film 2. When the above-described quantity is periodically increased and decreased, the thickness is periodically varied in the forwarding direction.

The thickness distribution of the adhesive layer 3 in the film width direction in the above-described embodiment is an example of aspects of the present invention, and the thickness distribution is not limited to this. For example, the thickness of the adhesive layer 3 may also be periodically varied in the film width direction.

A film exhibiting a percentage a/b × 100% of the total light transmittance a at the center in the film width direction relative to the total light transmittance b on both end sides of about 10% to 95% can be provided. In the case where the total light transmittance is made uniform in the longitudinal direction of the film, the rate of change of the total light transmittance in the longitudinal direction of the film can be made 10% or less.

In the case where the total light transmittance is periodically varied in the longitudinal direction of the film, a film exhibiting a percentage c/d × 100% of the lowest total light transmittance c at the center in the film width direction relative to the highest total light transmittance d of about 20% to 95% can be provided.

The materials and thicknesses of the mold release film 2, the adhesive layers 3 and 4, the base film 5, and the antireflection film 6 are not specifically limited. For example, the thickness of the mold release film 2 is 25 to 100 µm, the total thickness of the first adhesive layer 3 and the second adhesive layer 4 is 20 to 40 µm, the thickness of the base film 5 is 30 to 250 µm, and the thickness of the antireflection film 6 is 0.1 to 10 µm. The thickness of the central portion of the first adhesive layer 3 may be set at about 1.2 to 3 times the thickness of both end sides, although not limited to this. The colors of the adhesive layers 3 and 4 are not specifically limited. The width of the film 1 is set at, for example, 500 to 1,000 mm, although not limited to this.

Previously known various adhesives of, e.g. rubber base, acryl base, silicone base, and EVA base, can be used as the adhesive. A coloring matter added to the adhesive to adjust the total light transmittance of the adhesive layer is not specifically limited. Examples of pigments include inorganic pigments, e.g. carbon black, titanium oxide, chromium oxide, oxide yellow, red ion oxide, and ultramarine; and organic pigments, e.g. azo pigments, phthalocyanine pigments, anthracene pigments, threne pigments, and dioxazine pigments, although not limited to them.

An example of adhesives suitable for use in the film is an adhesive containing a (meth)acrylic resin as a primary component and an epoxy compound as a cross-linking agent, wherein the (meth)acrylic resin contains 1 to 25 percent by weight of monomer component having a carboxyl group, as a copolymerization component of the alkyl (meth)acrylate.

Next, the materials for the mold release film 2 and the base film 5 will be described.

Examples of materials for these films 2 and 5 include cellulose films of triacetyl cellulose base, polycarbonate films, polyester films, e.g. polyethylene terephthalate, and polyolefin films, e.g. polyethylene and polypropylene, although not limited to them.

The film 1 may include at least one of a hard coat layer, an electrically conductive layer, an antireflection layer, an antiglare layer, and the like.

The adhesive-including film may be manufactured by mixing at least two formulations having different total light transmittances and applying the resulting mixture to a film immediately after the mixing so as to form (a film of) the adhesive layer.

This method is effective against not only variations in luminance, but also variations in color saturation, since the thickness of the adhesive layer is not varied in a surface and, in addition, toning can be performed on a formulation basis. In this method as well, the above-described film formation method can be used. For example, as for the T die method, when the supply of material is divided into three before extrusion, and the resulting three components are put in so that the total light transmittances become large-medium-small from the end, a film of the adhesive having a large-medium-small total light transmittance after film formation can be formed. When the resulting three components are put in so that the total light transmittances become small-large-small, a film of the adhesive having a small-large-small total light transmittance after film formation can be formed. The same holds true for the comma method. The total light transmittance and the quantity of supply of each material are controlled and, thereby, an adhesive having a total light transmittance being continuously varied in one desired direction can be produced. Since this method can independently change the toning of each material, an adhesive layer having not only a total light transmittance being continuously varied, but also a color saturation being continuously varied, can be produced.

In the above-described embodiment, the total light transmittance of the adhesive layer is varied and, thereby, the total light transmittance of the film is varied in a one-dimensional direction or a two-dimensional direction. However, the total light transmittance of the film may also be varied in a one-dimensional direction or a two-dimensional direction by varying the total light transmittance of the base film itself. In order to realize this, it is essential that the content of coloring matter or pigment in the film is made to have a distribution in the one-dimensional direction or the two-dimensional direction during film formation. This coloring matter or pigment may be, for example, the above-described coloring matter or pigment to be contained in the adhesive. Alternatively, the concentration of the coloring matter or pigment in the base film may be kept constant, and the total light transmittance of the film may be varied in a one-dimensional direction or a two-dimensional direction by varying the thickness of the base film.

A colored layer different from the adhesive layer may be disposed on the surface of the base film, and the total light transmittance of the film may be varied in a one-dimensional direction or a two-dimensional direction by varying the thickness or the color strength of this colored layer. This colored layer may be disposed only for the purpose of varying the total light transmittance, or may also serve as a functional layer, e.g. an antireflection layer, an antiglare layer, a hard coat layer, or an electrically conductive layer. When this colored layer is formed, preferably a printing material containing a coloring matter or a pigment is printed. This coloring matter or pigment may be similar to that contained in the above-described adhesive layer.

The present invention will be more specifically described below with reference to examples and comparative examples. However, the present invention is not limited to the following examples, and covers various modifications and the like included within the scope of the present invention.

### Example 1

A flask was provided with a thermometer, an agitator, a reflux cooling pipe, and a nitrogen introduction pipe, and 68 parts by weight of n-butyl acrylate, 22 parts by weight of methyl acrylate, 10 parts by weight of acrylic acid, 0.1 parts by weight of azobisisobutylonitrile, 40 parts by weight of ethyl acetate, and 60 parts by weight of toluene were put therein. Nitrogen was introduced through the nitrogen introduction pipe and, thereby, the inside of the flask was brought to a nitrogen atmosphere. Thereafter, the resulting mixture was heated to 65°C and a polymerization reaction was performed for 10 hours, so that an acrylic polymer solution having a weight average molecular weight of about 350,000 and Tg of about -25°C was produced. Ethyl acetate was added to the acrylic polymer solution so that the solids content became 28 percent by weight and, therefore, a polymer solution A was produced.

A coating solution was prepared by blending 100 parts by weight of polymer solution A with 0.05 parts by weight of epoxy cross-linking agent (trimethylolpropane triglycidyl ether) and 2 parts by weight of pigment (CAB LX905 Black produced by TOYO INK MFG. CO., LTD.). The resulting coating solution was applied to a mold release PET film "DIAFOIL MRF38" (produced by Mitsubishi Polyester Film Corp.) having been subjected to a silicone treatment and having a thickness of 38 µm in a manner as shown in Figs. 4A and 4B, followed by drying. The same coating solution as the above-described coating solution except that no pigment was included was further applied thereon, followed by drying. Furthermore, a PET film "OLW" (produced by Teijin DuPont Films Japan Limited) having a thickness of 175 µm was stuck thereon.

In this manner, an adhesive-layer-including film having the sectional configuration shown in Fig. 1 (although the antireflection layer 6 is not shown) was produced.

The thickness of the central portion of the adhesive layer 3 was 20 µm, and the thicknesses of both end sides of the film were 10 µm. The total thickness of the adhesive layer 3 and the adhesive layer 4 was 25 µm (constant).

The mold release PET film was peeled off this film.

The resulting film was stuck to glass having a thickness of 3 mm, and the total light transmittance was measured. As a result, the total light transmittance of the film was 50% at the center in the width direction, and was 70% at both end sides.

As described above, a film having a total light transmittance being varied in the film width direction is provided.

## Claims

1. A method for manufacturing an adhesive-including film, including the step of supplying an adhesive on a film surface (2) to form an adhesive layer (3) on the film surface while the film is continuously forwarded, the method comprising the step of:
forming the adhesive layer so that the thickness of the adhesive layer is varied in a film, width direction orthogonal to the forwarding direction of the film.

2. A method as claimed in claim 1, comprising the step of:
forming the adhesive layer (3) by levelling the adhesive on the film surface (2) with a blade (13),
wherein the clearance between the blade and the film surface is varied in the width direction.

3. A method as claimed in claim 2, wherein the clearance between the blade (13) and the film surface (2) is periodically varied with time.

4. A method as claimed in claim 3, wherein the clearance between the blade (13) and the film surface (2) is periodically varied with time by shaking the blade in the forwarding direction of the film.

## Patentansprüche

1. Verfahren zur Herstellung einer Folie mit Klebstoff, das den Schritt des Zuführens eines Klebstoffes auf eine Folienoberfläche (2) umfasst, um eine Klebstoffschicht (3) auf der Folienoberfläche zu bilden, während die Folie kontinuierlich vorwärtsbewegt wird, wobei das Verfahren den folgenden Schritt aufweist:
Bilden der Klebstoffschicht, so dass die Dicke der Klebstoffschicht in einer Folienbreitenrichtung orthogonal zur Richtung der Vorwärtsbewegung der Folie variiert wird.

2. Verfahren nach Anspruch 1, das den folgenden Schritt aufweist:
Bilden der Klebstoffschicht (3) durch Glätten des Klebstoffes auf der Folienoberfläche (2) mit einer Rakel (13),
wobei der Abstand zwischen der Rakel und der Folienoberfläche in der Breitenrichtung variiert wird.

3. Verfahren nach Anspruch 2, bei dem der Abstand zwischen der Rakel (13) und der Folienoberfläche (2) periodisch mit der Zeit variiert wird.

4. Verfahren nach Anspruch 3, bei dem der Abstand zwischen der Rakel (13) und der Folienoberfläche (2) periodisch mit der Zeit variiert wird, indem die Rakel in der Richtung der Vorwärtsbewegung der Folie gerüttelt wird.

## Revendications

1. Procédé de fabrication d'un film engobant un adhésif, englobant l'étape d'application d'un adhésif sur la surface d'un film (2) pour former une couche adhésive (3) sur la surface du film, au cours de l'avance continue du film, le procédé comprenant l'étape ci-dessous:
formation de la couche adhésive de sorte que l'épaisseur de la couche adhésive est changée dans la direction de la largeur du film, orthogonale à la direction d'avance du film.

2. Procédé selon la revendication 1, comprenant l'étape ci-dessous :
formation de la couche adhésive (3) en nivelant l'adhésif sur la surface du film (2) par l'intermédiaire d'une lame (23),
le dégagement entre la lame et la surface du film étant changé dans la direction de la largeur.

3. Procédé selon la revendication 2, dans lequel le dégagement entre la lame (13) et la surface du film (2) est changée périodiquement dans le temps.

4. Procédé selon la revendication 3, dans lequel le dégagement entre la lame (13) et la surface du film (2) est changée périodiquement dans le temps, en agitant la lame dans la direction d'avance du film.
